# EUROPÄISCHE PATENTANMELDUNG

(11) **EP 4 286 298 A1**
(43) Veröffentlichungstag der Anmeldung: **06.12.2023**
(21) Anmeldenummer: 23171378.5
(22) Anmeldetag: 03.05.2023
(51) Int. Cl.: B65D 88/56, B65G 27/20, B65G 47/20, B65G 65/23, B65G 65/44, B65G 27/04, B23P 19/00

(54) **SYSTEM ZUR HANDHABUNG VON SCHÜTTGÜTERN**

(30) Priorität: 01.06.2022 DE 202022103096 U
(71) Anmelder: TAKTOMAT kurvengesteuerte Antriebssysteme GmbH, 86554 Pöttmes (DE)
(72) Erfinder: Hofstetter, Norbert, 86676 Hollenbach (DE)
(74) Vertreter: Glück Kritzenberger Patentanwälte PartGmbB

(57) **Zusammenfassung**

Die vorliegende Erfindung betrifft ein System (1) zur Handhabung von Schüttgut oder dergleichen Elementen entlang einer Handhabungsstrecke, wenigstens aufweisend eine Kippvorrichtung (2) und einen der Kippvorrichtung (2) entlang der Handhabungsstrecke nachgelagerten Vibrationsförderer (10), so dass das Schüttgut der Handhabungsstrecke an einem Einlauf (E) des Systems (1) schüttgutförmig zuführbar und an einem Auslauf (A) des Systems (1) vereinzelt oder im Wesentlichen vereinzelt abführbar ist, wobei die Kippvorrichtung (2) zumindest ein Maschinengestell (4) sowie einen an dem Maschinengestell (4) um eine horizontale Achse (AS) stufenlos motorisch antreibaren Schwenkkorb (6) zur Aufnahme des Schüttguts und/oder zumindest eines mit Schüttgut befüllten Behältnisses aufweist, wobei das Schüttgut mittels der Kippvorrichtung (2) dem Vibrationsförderer (10) dosiert zuführbar ist, und wobei der Vibrationsförderer (10) zumindest eine die Handhabungsstrecke bildendes Förderelement (12) für das Schüttgut sowie wenigstens einen regel- und/oder steuerbaren Vibrationsantrieb (16) aufweist, mittels dem eine derart vibrierende Bewegung des Förderelements (12) erzeugbar ist, dass das dem Förderelement (12) dosiert zugeführte Schüttgut entlang des Förderelements (12) vereinzelt oder im Wesentlichen vereinzelt wird und an den Auslauf (A) des Systems (1) förderbar ist.

## Beschreibung

Die Erfindung bezieht sich auf ein System zur Handhabung von Schüttgut oder dergleichen Elementen entlang einer Handhabungsstrecke.

Im Stand der Technik sind unterschiedlichste Systeme zur Handhabung von Schüttgütern oder dergleichen bekannt. Beispielsweise kennt der Fachmann zur Handhabung von Schüttgut so genannte Vibrationsförderer in zahlreichem Ausführungen. Diese werden insbesondere auch bei der automatischen Herstellung, Be- sowie Verarbeitung von Bauteilen, insbesondere mechanischen und/oder elektrischen Bauteilen, oder zum Fördern dieser Bauteile verwendet, wobei an der jeweiligen Förderstrecke zusätzlich zur Förderfunktion vielfach auch noch weitere Funktionen, beispielsweise Orientieren oder Ausscheiden von falschen Bauteilen vorgesehen sind.

Derartige Vibrationsförderer sind auch für unterschiedliche Anwendungsfälle, beispielsweise in der Holz-, Futter- und Nahrungsmittelindustrie bekannt. Die Schwingungsanregung wird beispielsweise durch Unwucht- oder Schubkurbelantriebe ausgebildet, welche durch ihre Rotations- und Translationsbewegungen, unterschiedlich geformte Fördereinheiten in lineare oder kreisförmige Schwingungen versetzen. Durch diese Form der Schwingungsanregung kommt es zu einer Relativbewegung zwischen dem Fördergut und der geometrisch geformten Fördereinheit. Diese Relativbewegung wird vielfach auch als Mikrowurfbewegung beschrieben.

Mehr im Detail werden die schüttfähigen Materialien, d.h. das Schüttgut, auf ein Förderelement ausgegeben, meist eine Förderrinne, die dann eine zyklische Vorwärts- / Aufwärtsbewegung mit einem entsprechenden Rücklauf - die Vibration - ausführt, wodurch die einzelnen Partikel oder Elemente des Schüttgutes in einem Wurfwinkel vorwärts und zugleich etwas hochgeworfen werden. Das Förderelement führt den Rücklauf aus, bevor die Elemente wieder auf ihm aufliegen, so dass mit der nächsten Vorwärts- / Aufwärtsbewegung die Elemente einen Schritt weiter gefördert werden können. Bei kleinen Auslenkungen kann auch vorwärts gefördert werden durch Reibungsunterschiede beim Vor- und Rücklauf. Vibrationsförderer besitzen entsprechend eine vibrierende Trägeranordnung für das auf ihr aufliegende, beispielsweise je nach Material oder anderen Kriterien konzipierte, austauschbare Förderelement, wobei die Trägeranordnung durch eine Antriebsanordnung in die gewünschte Vibration versetzt wird.

Werden hierbei größere Mengen an Schüttgut, also beispielsweise ein Schüttgut das aus mehreren 100 oder mehreren 1000 einzelnen Elementen besteht, auf den Vibrationsförderer gegeben, so kann es je nach Art des Schüttgutes dazu kommen, dass sich Nester oder Haufen an Schüttgut beim Befüllen des Förderelementes bilden und der Vibrationsförderer nicht mehr dazu in der Lage ist, die Nester oder Haufen an Schüttgut zu fördern, da das Funktionsprinzip des Vibrationsförderers im Wesentlichen darauf beruht, dass die Partikel des Schüttgutes zunächst auf dem Förderelement verteilt, also die Haufen oder Nester aufgelöst, und dann einzeln auf dem Förderelement bewegt werden. Besonders problematisch ist die Nester- bzw. Haufenbildung beim Befüllen des Förderelementes des Vibrationsförderers, wenn die einzelnen Elemente des Schüttgutes zum gegenseitigen Verhaken oder Verklemmen neigen. Handelt es sich beispielsweise bei dem Schüttgut um Schrauben, so verhaken diese oftmals mit ihren jeweiligen Gewinden derart ausgeprägt, dass sich diese entlang des Vibrationsförderers gegenseitig nicht lösen, wenn zu große Mengen an Schüttgut gleichzeitig auf den Vibrationsförderer gegeben werden. Diese Nester oder Haufen an Schrauben lassen sich somit während des Transports mit dem Vibrationsförderer nicht mehr vereinzeln und damit auch nicht bzw. nur schlecht vorherstimmbar transportieren. Lösen sich diese Nester oder Haufen nicht auf, so kommen dann am Auslauf des Vibrationsförderers unbestimmbare Mengen an Schüttgut an, die eine Weiterverarbeitung des Schüttgutes erschweren.

Aufgabe der Erfindung ist es daher, ein System zur Handhabung von Schüttgut oder dergleichen Elementen entlang einer Handhabungsstrecke aufzuzeigen, welches die Nachteile aus dem Stand der Technik beseitigt und dabei auch für eine Handhabung großer Mengen von mehreren 1000 Elementen an Schüttgut geeignet ist, welches zum gegenseitigen Verhaken neigt. Zur Lösung dieser Aufgabe ist ein System entsprechend dem Patentanspruch 1 ausgebildet. Die Unteransprüche betreffen dabei besonders vorteilhafte Ausführungsvarianten der Erfindung.

Der wesentliche Aspekt der vorliegenden Erfindung ist darin zu sehen, ein System zur Handhabung von Schüttgut oder dergleichen Elementen entlang einer Handhabungsstrecke vorzusehen, welches wenigstens eine Kippvorrichtung und einen der Kippvorrichtung entlang der Handhabungsstrecke nachgelagerten Vibrationsförderer aufweist, so dass das Schüttgut der Handhabungsstrecke an einem Einlauf des Systems schüttgutförmig zuführbar und an einem Auslauf des Systems vereinzelt oder im Wesentlichen vereinzelt abführbar ist. Die Kippvorrichtung weist hierfür zumindest ein Maschinengestell sowie einen an dem Maschinengestell um eine horizontale Achse stufenlos motorisch antreibaren Schwenkkorb zur Aufnahme des Schüttguts und/oder zumindest eines mit Schüttgut befüllten Behältnisses auf, wobei das Schüttgut mittels der Kippvorrichtung dem Vibrationsförderer dosiert zuführbar ist, und wobei der Vibrationsförderer zumindest eine die Handhabungsstrecke bildendes Förderelement für das Schüttgut sowie wenigstens einen regel- und/oder steuerbaren Vibrationsantrieb aufweist, mittels dem eine derart vibrierende Bewegung des Förderelements erzeugbar ist, dass das dem Förderelement dosiert zugeführte Schüttgut entlang des Förderelements vereinzelt oder im Wesentlichen vereinzelt wird und an den Auslauf des Systems förderbar ist. Erfindungsgemäß ist also ein System mit einer Kippvorrichtung zum dosierten also sukzessiven Befüllen des Vibrationsförderers vorgesehen, so dass bei großen Mengen von mehreren 1000 Elementen an Schüttgut nicht alles auf einmal auf den Vibrationsförderer gekippt wird, sondern nach und nach eine vorherbestimmbare Menge an Elementen. Hierfür ist die Kippvorrichtung mit einem stufenlos motorisch antreibaren Schwenkkorb ausgestattet, der eine besonders exakte Dosierung der einzelnen Elemente des Schüttgutes auf das Förderelement des Vibrationsförderers ermöglicht. Auf diese Weise können selbst in einem Behältnis von beispielsweise bis zu 1200cm Länge, 1100cm Breite, und 1200cm Höhe lose aufgenommene mehrere 1000 Schrauben als Schüttgut mittels des erfindungsgemäßen Systems gehandhabt werden. Unter dem Begriff "vereinzelt" wird im Rahmen der vorliegenden Erfindung verstanden, wenn zwei Elemente des Schüttguts benachbart nebeneinanderliegen. Die beiden Elemente müssen dabei jedoch nicht zwingend beabstandet nebeneinanderliegen, sondern können sich dabei auch noch in einem oder mehreren Punkten berühren. Insbesondere liegen die einzelnen Elemente des Schüttgutes im "vereinzelten" Zustand nicht mehr übereinander, insbesondere nicht haufenförmig übereinander.

Gemäß einer vorteilhaften Ausführungsvariante kann dabei vorgesehen sein, dass das Maschinengestell mehrere Längsholme aufweist, die über zumindest einen, vorzugsweise mehrere Querträger verbunden sind und wobei die Längsholme höhenverstellbar ausgebildet sind, so dass sich über eine Höhenverstellung der Längsholme die relative Höhenlage des an dem Maschinegestell aufgenommen Schwenkkorbes zu einer Bodenebene einstellen lässt.

Gemäß einer weiteren vorteilhaften Ausführungsvariante kann dabei vorgesehen sein, dass der Schwenkkorb an den Querträgern des Maschinengestells um die horizontale Achse AS stufenlos motorisch angetrieben kippbar angeordnet ist, wobei an vorzugsweise gegenüberliegenden Seiten der horizontalen Achse beidseitig jeweils ein Stehlager vorgesehen ist, mittels denen der Schwenkkorb drehbar gelagert aufgenommen ist.

Gemäß einer nochmals weiteren vorteilhaften Ausführungsvariante kann dabei vorgesehen sein, dass der Schwenkkorb in einer ersten Höhenebene höher liegt als der in einer zweiten Höhenebene angeordnete Vibrationsförderer, so dass das Schüttgut von der Kippvorrichtung auf den Vibrationsförderer gekippbar ist.

Gemäß einer nochmals weiteren vorteilhaften Ausführungsvariante kann dabei vorgesehen sein, dass die horizontale Schwenkachse in ihrer Längserstreckung parallel oder im Wesentlichen parallel oberhalb des Vibrationsförderers, insbesondere parallel oberhalb des Förderelements des Vibrationsförderers, vorgesehen ist und zwar vorzugsweise derart, dass mittels des Schwenkkorbes der Kippvorrichtung Schüttgut von der ersten Höhenebene in den Vibrationsförderer auf eine zweite Höhenebene abgekippt werden kann.

Gemäß einer nochmals weiteren vorteilhaften Ausführungsvariante kann dabei vorgesehen sein, dass der Schwenkkorb aus einer Beladeposition stufenlos um bis zu 135° motorisch gesteuert - und/oder geregelt in zumindest eine Kippposition verschwenkbar ausgebildet ist.

Gemäß einer nochmals weiteren vorteilhaften Ausführungsvariante kann dabei vorgesehen sein, dass die Kippvorrichtung zur mechanischen Begrenzung des Schwenkbereiches des Schwenkkorbs zumindest ein Anschlagselement aufweist, das vorzugsweise als hydraulische Stoßdämpfer ausgebildet ist.

Gemäß einer nochmals weiteren vorteilhaften Ausführungsvariante kann dabei vorgesehen sein, dass zur Einleitung der Schwenkbewegung auf den Schwenkkorb eine elektrische Antriebseinrichtung vorgesehen ist, die vorzugsweise eine Getriebeeinrichtung aufweist, mittels der die Antriebseinrichtung mechanisch mit dem Schwenkkorb gekoppelt ist.

Gemäß einer nochmals weiteren vorteilhaften Ausführungsvariante kann dabei vorgesehen sein, dass die Antriebseinrichtung als frequenzgeregelter Motor oder Servomotor ausgebildet ist, der über eine als Winkelgetriebe ausgebildete Getriebeeinrichtung mit dem Schwenkkorb derart verbunden ist, dass dieser stufenlos zwischen 0° und 135° relativ zum Förderelement des Vibrationsförderers schenkbar ist.

Gemäß einer nochmals weiteren vorteilhaften Ausführungsvariante kann dabei vorgesehen sein, dass die Kippvorrichtung eine über eine Steuer- und Auswerteeinrichtung ansteuerbare und/oder händisch bewegbare Fixiereinrichtung zur mechanischen Fixierung des Schwenkkorbes in der jeweiligen Kippposition und/oder Beladeposition aufweist.

Gemäß einer nochmals weiteren vorteilhaften Ausführungsvariante kann dabei vorgesehen sein, dass die Fixiereinrichtung zumindest einen Fixierbolzen aufweist, der in ein von mehreren vorgesehenen Fixierlöchern des Schwenkkorbes mechanisch einfahrbar ausgebildet ist, indem der Fixierbolzen mittels eines Stellantriebs zwischen einer in ein Fixierloch eingreifenden Fixierposition und einer das entsprechende Fixierloch freigebenden Freigabeposition gesteuert und/oder geregelt verstellbar ist.

Gemäß einer nochmals weiteren vorteilhaften Ausführungsvariante kann dabei vorgesehen sein, dass die Fixiereinrichtung in Abhängigkeit zumindest eines Signals wenigstens einer Sensoreinrichtung, insbesondere einer optischen Sensoreinrichtung, wie einer Lichtschranke oder einer Kamera, betreibbar ist.

Gemäß einer nochmals weiteren vorteilhaften Ausführungsvariante kann dabei vorgesehen sein, dass der Stellantrieb den Fixierbolzen der Fixiereinrichtung in Abhängigkeit eines Signals der Sensoreinrichtung zwischen einer in ein Fixierloch eingreifenden Fixierposition und einer das entsprechende Fixierloch freigebenden Freigabeposition gesteuert und/oder geregelt verstellt.

Gemäß einer nochmals weiteren vorteilhaften Ausführungsvariante kann dabei vorgesehen sein, dass der Schwenkkorb mehrere, in gleichen oder näherungsweise gleichen Winkelabständen um die horizontale Achse verteilt angeordnete Fixierlöcher aufweist, die jeweils nierenförmig ausgebildet sind.

Gemäß einer nochmals weiteren vorteilhaften Ausführungsvariante kann dabei vorgesehen sein, dass das System eine an dem Schwenkkorb angeordnete und an unterschiedliche Behältergrößen und/oder Behälterformen anpassbare Lagefixiereinrichtung zur lagestabilen Fixierung eines entsprechenden Behältnisses in dem Schwenkkorb aufweist.

Gemäß einer nochmals weiteren vorteilhaften Ausführungsvariante kann dabei vorgesehen sein, dass die Lagefixiereinrichtung zur lagestabilen Fixierung eines entsprechenden Behältnisses in dem Schwenkkorb eine Anschlagseinrichtung und eine Höhenverstelleinrichtung aufweist, wobei sowohl die Anschlagseinrichtung als auch die Höhenverstelleinrichtung an unterschiedliche Behältergrößen und/oder Behälterformen anpassbare sind.

Gemäß einer nochmals weiteren vorteilhaften Ausführungsvariante kann dabei vorgesehen sein, dass die Anschlagseinrichtung an einer, einer Öffnung gegenüberliegenden Seitenwand des Schwenkkorbes ausgebildet ist und an unterschiedliche Höhen von Behältnissen anpassbar ist, indem die Anschlagseinrichtung zumindest ein entlang einer schienenförmigen Führungsöffnung verschiebbares hakenförmiges Eingriffselement aufweist, das mit dem freien Randbereich der Oberkante des Behältnisses in Eingriff bringbar ist.

Gemäß einer nochmals weiteren vorteilhaften Ausführungsvariante kann dabei vorgesehen sein, dass die mechanisch verstellbare Höhenverstelleinrichtung an der Öffnung des Schwenkkorbes ausgebildet ist und einen Bügel aufweist, der mit seinen freien Enden jeweils in einer schienenförmigen Rastleiste mit mehreren haken- oder nasenförmigen Rastpositionen für den Bügel eingreift, wobei die Lagefixiereinrichtung dazu ausgebildet, den Bügel in der jeweiligen haken- oder nasenförmigen Rastposition fest, jedoch lösbar, in der entsprechenden Rastleiste zu halten.

Gemäß einer nochmals weiteren vorteilhaften Ausführungsvariante kann dabei vorgesehen sein, dass das Schüttgut mittels der Kippvorrichtung dem Vibrationsförderer dosiert zuführbar ist, in dem die Antriebseinrichtung zum Kippen des Schwenkkorbes von der Steuer- und Auswerteeinrichtung in Abhängigkeit eines von einer weiteren Sensoreinrichtung erfassten Signals ansteuerbar ist, wobei die weitere Sensoreinrichtung als optische Sensoreinrichtung, insbesondere als Kamera, ausgebildet ist, die dazu vorgesehen ist, das von der Kippvorrichtung auf die Vibrationsfördereinrichtung abgekippte Schüttgut zu erfassen. Ferner kann auch vorgesehen sein, dass eine als Füllstandsensor ausgebildete weitere optische Sensoreinrichtung, beispielsweise eine Lichtschranke, vorgesehen ist, die den Füllstand des Schüttgutes in dem Vibrationsförderer erfasst und die Antriebseinrichtung zum Kippen des Schwenkkorbes von der Steuer- und Auswerteeinrichtung in Abhängigkeit in Abhängigkeit des erfassten Füllstands des Vibrationsförderers abgekippt wird.

Gemäß einer nochmals weiteren vorteilhaften Ausführungsvariante kann dabei vorgesehen sein, dass das Förderelement einen Abgabeabschnitt für das Schüttgut aufweist, über den das Schüttgut aus dem Vibrationsförderer abgebbar ist, wobei der Abgabeabschnitt als Rutschblech mit einer Abwurfkante für das Schüttgut ausgebildet ist.

Gemäß einer nochmals weiteren vorteilhaften Ausführungsvariante kann dabei vorgesehen sein, dass zwischen dem Vibrationsförderer und dem Auslauf eine weitere Fördereinrichtung vorgesehen ist, die das Schüttgut von dem Vibrationsförderer übernimmt und an den Auslauf fördert.

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:

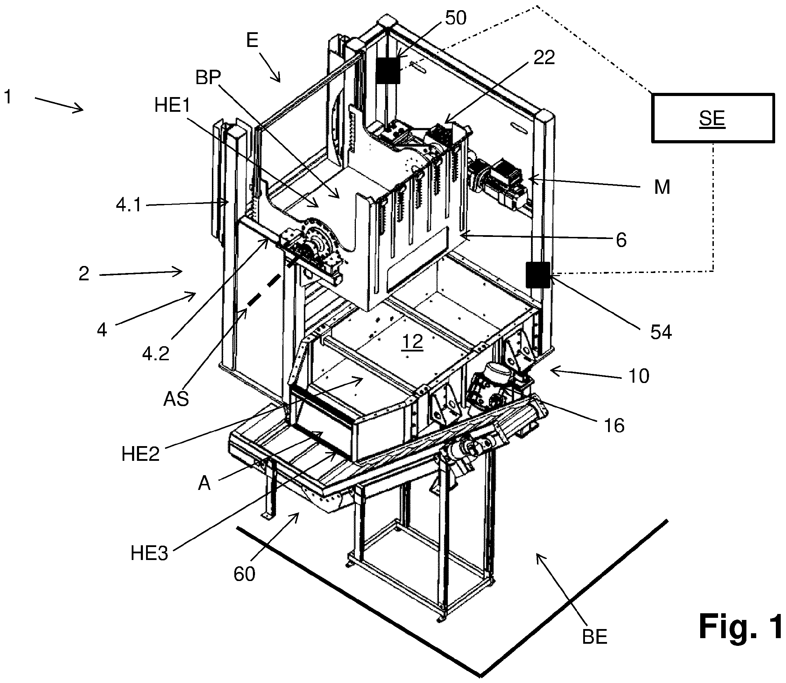

- Fig. 1: in vereinfachter perspektivischer Darstellung eine beispielhafte Ausführungsvariante eines erfindungsgemäßen Systems;

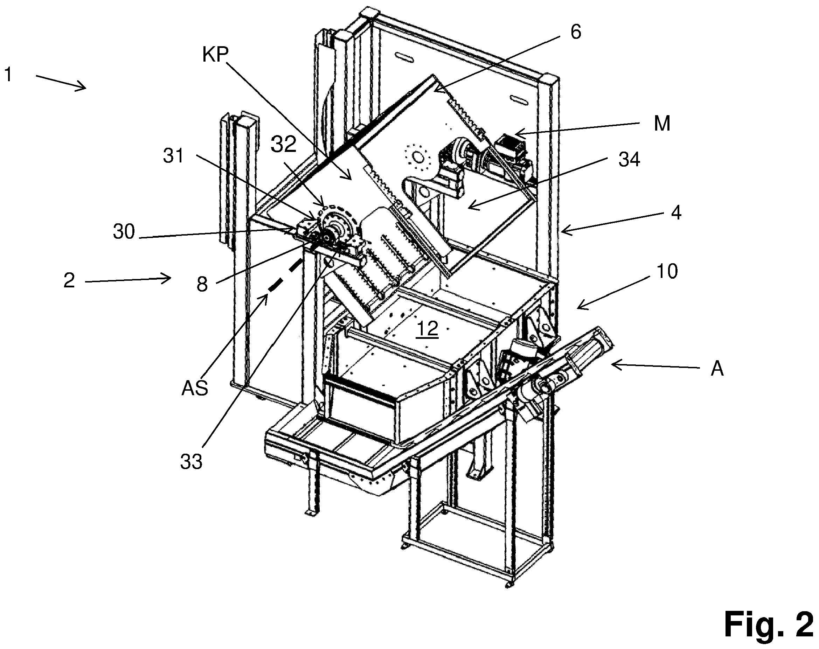

- Fig. 2: das erfindungsgemäße System der Figur in einer weiteren vereinfachten perspektivischen Darstellung;

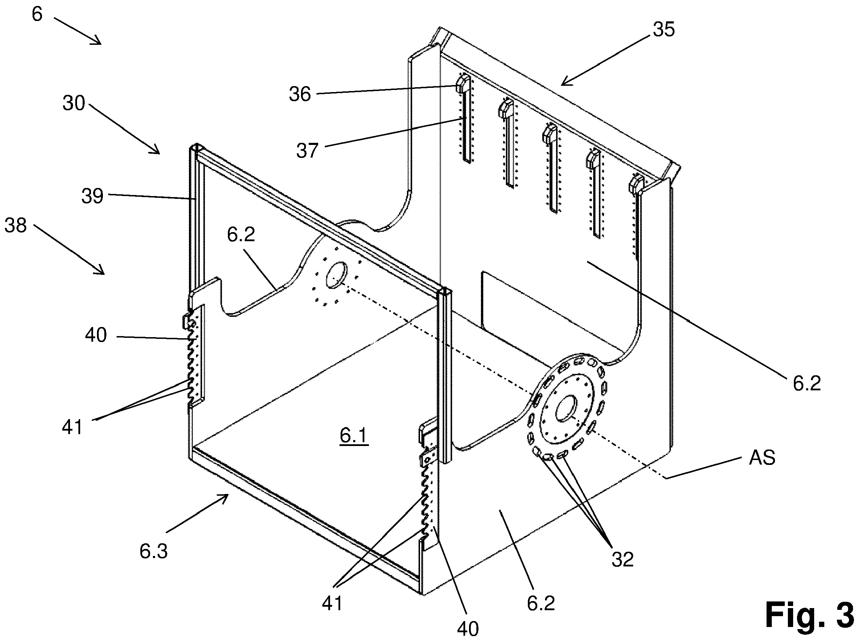

- Fig. 3: in vereinfachter perspektivischer Darstellung eine beispielhafte Ausführungsvariante eines Schwenkkorbes des erfindungsgemäßen Systems; und

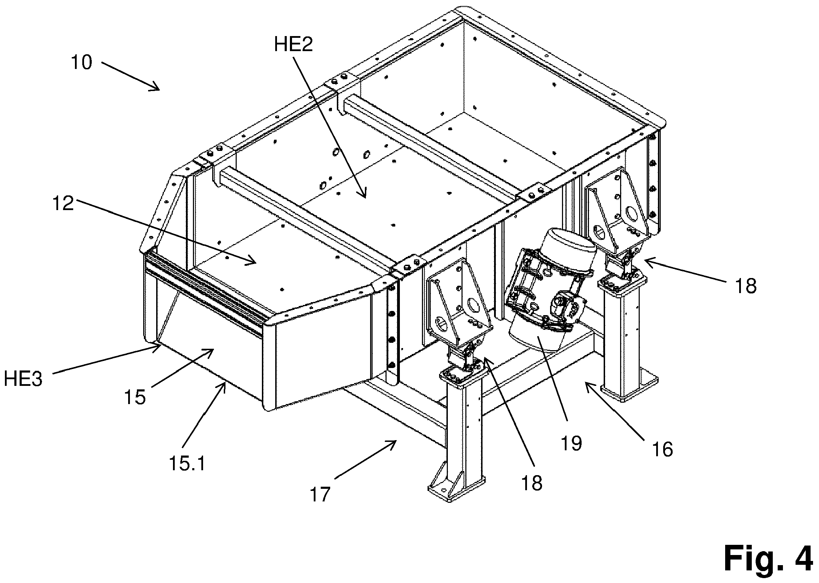

- Fig. 4: in vereinfachter perspektivischer Darstellung eine beispielhafte Ausführungsvariante eines alleingestellten Vibrationsförderers des erfindungsgemäßen Systems.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

In den Figuren ist mit 1 ein System zur Handhabung von Schüttgut oder dergleichen Elementen entlang einer Handhabungsstrecke bezeichnet. Hierbei weist das System 1 wenigstens eine Kippvorrichtung 2 und einen der Kippvorrichtung 2 entlang der Handhabungsstrecke nachgelagerten Vibrationsförderer 10 auf, so dass das Schüttgut der Handhabungsstrecke an einem Einlauf E des Systems 1 schüttgutförmig zuführbar und an einem Auslauf A des Systems 1 vereinzelt oder im Wesentlichen vereinzelt abführbar ist. Die Handhabungsstrecke für das Schüttgut ist also zwischen dem Einlauf E und dem Auslauf A ausgebildet.

Beispielsweise kann das Schüttgut an den Einlauf E in nicht nähergehend dargestellten Behältnissen angefördert werden, in denen das Schüttgut lose und ungeordnet sowie unsortiert aufgenommen ist. Beispielsweise kann es sich bei dem Schüttgut um Maschinenteile und/oder Maschinenelemente, insbesondere Verbindungselemente wie Schrauben oder Muttern handeln. Dabei ist das Schüttgut jedoch ausdrücklich nicht auf die genannten Beispiele beschränkt.

Bei dem Behältnis kann es sich um Kisten, Kartons, Paletten oder Behälter handeln, die zum Aufnehmen eines Schüttgutgewichtes von bis zu 700kg ausgebildet sind. Auch kann das Schüttgut dem Einlauf E des Systems 1 lose, also ohne Behältnis, zugeführt werden. Hierfür kann beispielsweise der Inhalt eines mit Schüttgut befüllten Behältnisses maschinell, beispielsweise mittels eines Staplers, oder Roboters, dem Einlauf E zugeführt werden.

Mehr im Detail kann das Schüttgut, ob in Behältnissen aufgenommen, oder in loser Form, von einem Schwenkkorb 6 der Kippvorrichtung 2 aufgenommen werden. Die Kippvorrichtung 2 weist hierfür zumindest ein Maschinengestell 4 sowie den an dem Maschinengestell 4 um eine horizontale Achse AS stufenlos motorisch antreibaren Schwenkkorb 6 zur Aufnahme des Schüttguts und/oder zumindest eines mit Schüttgut befüllten Behältnisses auf.

Vorteilhaft wird das Schüttgut dem System 1 jedoch in einem Behältnis zugeführt, so dass der Schwenkkorb 6 der Kippvorrichtung 2 das Behältnis mit samt den darin schüttfähig und lose aufgenommenen Elementen des Schüttgutes aufnimmt.

Das Maschinengestell 4 der Kippvorrichtung 2 steht dabei auf einer Bodenebne BE, beispielsweise einem Hallenboden einer Werkshalle, auf, und ist als Stahlkonstruktion ausgebildet. Mehr im Detail weist das Maschinengestell 4 mehrere Längsholme 4.1 auf, die über zumindest einen, vorzugsweise mehrere Querträger 4.2 verbunden sein können. Dabei kann vorgesehen sein, dass die Längsholme 4.1 höhenverstellbar ausgebildet sind, so dass sich über eine Höhenverstellung der Längsholme 4.1 die relative Höhenlage des an dem Maschinegestell 4 aufgenommen Schwenkkorbes 6 zur Bodenebene BE einstellen lässt.

Der Schwenkkorb ist dabei mehr im Detail an den Querträgern 4.2 des Maschinengestells 4 um die horizontale Achse AS stufenlos motorisch angetrieben kippbar angeordnet. Hierfür kann das System 1 an vorzugsweise gegenüberliegenden Seiten der horizontalen Achse AS beidseitig jeweils ein Stehlager 8 aufweisen, mittels denen der Schwenkkorb 6 drehbar gelagert aufgenommen ist.

Insbesondere ist der Schwenkkorb 6 mittels des Maschinenrahmens 4 in einer ersten Höhenebene HE1 angeordnet, die weiter von der Bodenebene BE entfernt, d.h. höher, ist als eine mittels des Vibrationsförderers 10 ausgebildete zweite Höhenebene HE2. In anderen Worten ist also der Schwenkkorb 6 in der ersten Höhenebene HE1 höher als der Vibrationsförderer 10 der zweiten Höhenebene HE2, so dass das Schüttgut von der Kippvorrichtung 2 auf den Vibrationsförderer 10 herabfallen kann.

Ferner ist die horizontale Schwenkachse AS in ihrer Längserstreckung parallel oder im Wesentlichen parallel oberhalb des Vibrationsförderers 10, insbesondere parallel oberhalb des Förderelements 12 des Vibrationsförderers 10 vorgesehen und zwar vorzugsweise derart, dass mittels des Schwenkkorbes 6 der Kippvorrichtung 2 Schüttgut von der ersten Höhenebene HE1 in den Vibrationsförderer 10 auf eine zweite Höhenebene HE2 abgekippt werden kann.

Der Schwenkkorb 6 weist hierfür zumindest eine Bodenplatte 6.1, sowie wenigstens drei vorzugsweise senkrecht von der Bodenplatte 6.1 abstehende Seitenwände 6.2 auf, die die Bodenplatte 6.1 an wenigstens drei Seiten seitlich begrenzen. Vorzugsweise weist die Bodenplatte 6.1 eine viereckige, besonders vorteilhafte eine rechteckige oder quadratische, Grundform auf. Die Bodenplatte 6.1 des Schwenkkorbs 6 ist dabei eben und flächig ausgebildet und zur Aufnahme des Schüttguts und/oder zumindest eines mit Schüttgut befüllten Behältnisses vorgesehen. Insbesondere bildet der Schwenkkorb 6 mit seiner Bodenplatte 6.2 und den drei Seitenwänden 6.2 ein Aufnahmebehältnis für das Schüttgut aus. Der Schwenkkorb 6 weist zudem an der vierten Seite, an der keine Seitenwand 6.2 vorgesehen ist, eine freie Öffnung 6.3 auf. Die freie Öffnung 6.3 ist zum Beladen des Schwenkkorbes 6 vorgesehen, wobei die Öffnung 6.3 vorteilhaft den Einlauf E des Systems 1 bildet.

Vorteilhaft befindet sich der Schwenkkorb 6 in einer Beladeposition BP mit seiner Bodenplatte 6.1 parallel oder im Wesentlichen parallel orientiert zur Bodenebene BE, d.h. der Schwenkkorb 6 ist in der Beladeposition um 0° Grad relativ zu der Bodeneben BE ausgelenkt. Zudem befindet sich der Schwenkkorb 6 in der Beladeposition BP vorzugsweise mit seiner Bodenplatte 6.1 parallel orientiert zum Förderelement 12 des Vibrationsförderer 10 angeordnet, d.h. der Schwenkkorb 6 ist in der Beladeposition auch um 0° Grad relativ flächigen Erstreckung des Förderelements 12 ausgelenkt.

Dabei kann vorgesehen sein, dass der Schwenkkorb 6 aus seiner Beladeposition BP stufenlos um bis zu 135° motorisch gesteuert - und/oder geregelt in zumindest eine Kippposition KP verschwenkt, also gekippt werden kann. Vorteilhaft kann der Schwenkkorb 6 aus der Beladeposition BP beidseitig, d.h. nach vorne und hinten, jeweils stufenlos um bis zu 135° motorisch gesteuert - und/oder geregelt in zumindest eine Kippposition KP verschwenkt, also gekippt werden.

Zudem kann die Kippvorrichtung 2 zur mechanischen Begrenzung des Schwenkbereiches des Schwenkkorbs 6 Anschlagselemente aufweisen, die vorzugsweise als hydraulische Stoßdämpfer ausgebildet sind.

Die Einleitung der Schwenkbewegung auf den Schwenkkorb 6 kann dabei mittels einer elektrischen Antriebseinrichtung M erfolgen. Mehr im Detail kann die Antriebseinrichtung M eine Getriebeeinrichtung 22 aufweisen, mittels der die Antriebseinrichtung M mechanisch mit dem Schwenkkorb 6 gekoppelt ist. Bei der Antriebseinrichtung M kann es sich um einen frequenzgeregelten Motor oder Servomotor handeln, der über eine als Winkelgetriebe ausgebildete Getriebeeinrichtung 22 mit dem Schwenkkorb 6 derart verbunden ist, dass dieser stufenlos zwischen 0° und 135° relativ zum Förderelement 12 des Vibrationsförderers 10 schenkbar ist. Bei der Antriebseinrichtung M mit Getriebeeinrichtung 22 kann es sich dabei um einen frequenzgeregelten Getriebe-Bremsmotor, vorzugsweise einen Servo-Schneckengetriebantrieb, handeln.

Vorzugsweise kann der Antriebsmotor M dazu ausgebildet sein, den Schwenkkorb 6 mit einer Last von bis zu 750kg um die horizontale Achse AS stufenlos motorisch zwischen der Beladeposition BP und der Kippposition KP anzutreiben, insbesondere zu kippen.

Ferner kann die Kippvorrichtung 2 eine über eine Steuer- und Auswerteeinrichtung SE ansteuerbare und/oder händisch bewegbare Fixiereinrichtung 30 zur mechanischen Fixierung des Schwenkkorbes 6 in der jeweiligen Kippposition KP und/oder Beladeposition BP aufweisen. In anderen Worten kann also der Schwenkkorb 6 mittels der Fixiereinrichtung 30 in seiner jeweiligen Kippposition KP und/oder Beladeposition BP lagefixiert werden. Die Fixiereinrichtung 30 kann zumindest einen Fixierbolzen 31 aufweisen, der in ein von mehreren vorgesehenen Fixierlöchern 32 des Schwenkkorbes 6 mechanisch eingreifen, bzw. in eines der Fixierlöcher 32 eingefahren werden kann. Der Fixierbolzen 31 kann dabei mittels eines Stellantriebs 33 zwischen einer in ein Fixierloch 32 eingreifenden Fixierposition und einer das entsprechende Fixierloch 32 freigebenden Freigabeposition gesteuert und/oder geregelt verstellt werden. In der eingreifenden Fixierposition ist dabei der Fixierbolzen 31 in eines der Fixierlöcher 32 eingefahren, während der Fixierbolzen 31 in der Freigabeposition wieder aus diesem Fixierloch 32 herausgefahren ist, also nicht mehr in Wirkeingriff mit dem Fixierloch 32 steht und sich der Schwenkkorb 6 frei um die horizontale Achse AS drehen kann.

Mehr im Detail kann die Fixiereinrichtung 30 dabei in Abhängigkeit zumindest eines Signals wenigstens einer Sensoreinrichtung 50, beispielsweise einer optischen Sensoreinrichtung, insbesondere einer Lichtschranke oder einer Kamera, betrieben werden.

Hierfür kann der Stellantrieb 33 den Fixierbolzen 31 der Fixiereinrichtung 30 in Abhängigkeit eines Signals der Sensoreinrichtung 50 zwischen einer in ein Fixierloch 32 eingreifenden Fixierposition und einer das entsprechende Fixierloch 32 freigebenden Freigabeposition gesteuert und/oder geregelt verstellen. Dabei ist die Steuer- und Auswerteeinrichtung SE zur Verarbeitung des Signals der Sensoreinrichtung 50 und zur Ansteuerung der Fixiereinrichtung 30 ausgebildet.

Vorzugsweise kann der Schwenkkorb 6 mehrere, in gleichen oder näherungsweise gleichen Winkelabständen um die horizontale Achse AS verteilt angeordnete Fixierlöcher 31 aufweisen. Die Fixierlöcher 31 können dabei nierenförmig ausgebildet sein.

Ferner kann das System 1 eine an dem Schwenkkorb 6 angeordnete und an unterschiedliche Behältergrößen und/oder Behälterformen anpassbare Lagefixiereinrichtung 34 zur lagestabilen Fixierung eines entsprechenden Behältnisses in dem Schwenkkorb 6 aufweisen. Insbesondere ist die Fixiereinrichtung 34 dazu ausgebildet, ein Behältnis zwischen der Beladeposition BP und der Kippposition KP lagestabil in dem Schwenkkorb 6 zu halten.

Dazu kann die Lagefixiereinrichtung 34 zur lagestabilen Fixierung eines entsprechenden Behältnisses in dem Schwenkkorb 6 eine Anschlagseinrichtung 35 und eine Höhenverstelleinrichtung 38 aufweisen, wobei sowohl die Anschlagseinrichtung 35 als auch die Höhenverstelleinrichtung 38 an unterschiedliche Behältergrößen und/oder Behälterformen anpassbare sind. Mehr im Detail sind die Anschlagseinrichtung 35 und die Höhenverstelleinrichtung 38 mechanisch verstellbar an das jeweilige in dem Schwenkkorb 6 aufgenommene Behältnis ausgebildet.

Die Anschlagseinrichtung 35 kann an der Öffnung 6.3 gegenüberliegenden Seitenwand 6.2 des Schwenkkorbes 6 ausgebildet sein und an unterschiedliche Höhen von Behältnissen anpassbar sein, indem die Anschlagseinrichtung 35 zumindest ein entlang einer schienenförmigen Führungsöffnung 37 verschiebbares hakenförmiges Eingriffselement 36 aufweist, das mit dem freien Randbereich der Oberkante des Behältnisses in Eingriff bringbar ist, indem das Eingriffselement 36 die Oberkante des Behältnisses zumindest teilweise umgreift.

Vorzugsweise kann die Anschlagseinrichtung 35 mehrere hakenförmige Eingriffselemente 36 aufweisen, die jeweils entlang einer schienenförmigen Führungsöffnung 37 geführt sind und in unterschiedlichen Positionen entlang der Führungsöffnung 37 lösbar fixierbar ausgebildet sind. Die Eingriffselemente 36 sind entlang der Führungsöffnung 37 in ihrer jeweiligen eingestellten Position lösbar fixierbar, also nicht mehr verschiebbar, ausgebildet.

Ferner weist die Lagefixiereinrichtung 34 die ebenfalls mechanisch verstellbare Höhenverstelleinrichtung 38 auf, die an der Öffnung 6.3 des Schwenkkorbes 6 ausgebildet ist und die einen vorzugsweise U-förmigen Bügel 39 umfasst der mit seinen freien Enden jeweils in einer schienenförmigen Rastleiste 40 mit mehreren haken- oder nasenförmigen Rastpositionen 41 für den Bügel 39 eingreift. Es sind damit zwei schienenförmige Rastleisten 40, eine für jedes Ende des Bügels 39, vorgesehen. Mehr im Detail ist die Lagefixiereinrichtung 34 dazu ausgebildet, den Bügel 39 in der jeweiligen haken- oder nasenförmigen Rastposition 41 fest, jedoch lösbar, also lagefixiert, in der Rastleisten 40 zu halten. Vorzugsweise ist der Bügel 39 dazu ausgebildet, die Oberseite eines in dem Schwenkkorb 6 aufgenommenen Behältnisses zu umgreifen, indem der Bügel 39 die Öffnung 6.3 des Schwenkkorbes 6 nach oben hin, also auf der Bodenplatte 6.1 gegenüberliegenden Seite, begrenzt.

Das Schüttgut kann dabei mittels der Kippvorrichtung 2 dem Vibrationsförderer 10 dosiert zugeführt wird, in dem die Antriebseinrichtung M zum Kippen des Schwenkkorbes 6 von der Steuer- und Auswerteeinrichtung SE in Abhängigkeit eines von einer weiteren Sensoreinrichtung 54 erfassten Signals ansteuert wird. Die weitere Sensoreinrichtung 54 kann ebenfalls eine optische Sensoreinrichtung, insbesondere eine Kamera, sein, die dazu ausgebildet ist, das von der Kippvorrichtung 2 auf die Vibrationsfördereinrichtung 10 abgekippte Schüttgut zu erfassen. Gemäß einer nicht gezeigten Ausführungsvariante kann auch vorgesehen sein, dass eine als Füllstandsensor ausgebildete weitere optische Sensoreinrichtung 54, beispielsweise eine Lichtschranke, vorgesehen ist, die den Füllstand des Schüttgutes in dem Vibrationsförderer 10 erfasst und die Antriebseinrichtung M zum Kippen des Schwenkkorbes 6 von der Steuer- und Auswerteeinrichtung SE in Abhängigkeit in Abhängigkeit des erfassten Füllstands des Vibrationsförderers 10 abgekippt wird.

Ferner weist der Vibrationsförderer 10 des Systems 1 zumindest eine die Handhabungsstrecke bildendes Förderelement 12 für das Schüttgut sowie wenigstens einen regel- und/oder steuerbaren Vibrationsantrieb 16 auf, mittels dem eine derart vibrierende Bewegung des Förderelements 12 erzeugbar ist, dass das dem Förderelement 12 dosiert zugeführte Schüttgut entlang des Förderelements 12 vereinzelt oder im Wesentlichen vereinzelt wird und an den Auslauf A des Systems 1 förderbar ist. Mehr im Detail ist der Vibrationsförderer 10 damit als Linear- Förderer ausgebildet, dessen lineare Förderstrecke durch das Förderelement 12 gebildet ist.

Vorzugsweise ist das Förderelement 12 des Vibrationsförderers 10 als Förderrinne oder Rüttelbunker ausgebildet, deren Längserstreckung die Förderstrecke bildet, wobei die Längserstreckung parallel oder im Wesentlichen parallel zur horizontalen Achse AS verläuft. Dabei ist das Förderelement 12 des Vibrationsförderers 10 auf der zweiten Höhenebene HE2 ausgebildet.

Ferner weist das Förderelement 12 einen Abgabeabschnitt 15 für das Schüttgut auf, über den das Schüttgut aus dem Vibrationsförderer 10 beispielsweise an den Auslauf A abgegeben werden kann. Der Abgabeabschnitt 15 kann dabei als Rutschblech mit einer Abwurfkante 15.1 für das Schüttgut ausgebildet sein, so dass mittels des Abgabeabschnittes 15 das Schüttgut von der zweiten Höhenebne HE2 rutschend auf bzw. an eine darunter liegende dritte Höhenebene HE3 förderbar ist und an der Abwurfkante 15.1 abgeworfen werden kann. Insbesondere ist die dritte Höhenebene HE3 an der Abwurfkante 15.1 ausgebildet.

Ferner kann zwischen dem Vibrationsförderer 10 und dem Auslauf A auch eine weitere Fördereinrichtung 60 vorgesehen sein, die das Schüttgut von dem Vibrationsförderer 10 übernimmt und an den Auslauf A fördert. Die weitere Fördereinrichtung 60 kann als Schrägbandförderer, insbesondere als Treppenförderer, ausgebildet sein.

Beispielsweise werden die schüttfähigen Materialien, d.h. das Schüttgut, mittels des Schwenkkorbes 6 auf das Förderelement 12 gegeben, die dann mittels eines steuer- und/oder regelbaren Vibrationsantriebs 16 des Vibrationsförderers 10 eine zyklische Vorwärts- / Aufwärtsbewegung mit einem entsprechenden Rücklauf - die Vibration - ausführt, wodurch die einzelnen Elemente des Schüttgutes in einem Wurfwinkel vorwärts und zugleich etwas hochgeworfen werden. Das Förderelement 12 führt den Rücklauf aus, bevor die Elemente wieder auf ihm aufliegen, so dass mit der nächsten Vorwärts- / Aufwärtsbewegung die Elemente einen Schritt weiter entlang der Handhabungsstrecke gefördert werden können. Bei kleinen Auslenkungen kann auch vorwärts gefördert werden durch Reibungsunterschiede beim Vor- und Rücklauf. Hierfür weist der Vibrationsförderer 10 eine auf der Bodenebene BE aufstehende, ortsfeste sowie unbewegte Rahmenkonstruktion 17 auf, an der über eine mit dem Förderelement 12 mitvibrierende Trägeranordnung 18 das Förderelement 12 an der Rahmenkonstruktion 17 gehalten ist. Das Förderelement 12 kann durch den Vibrationsantrieb 16 in die gewünschte Vibration versetzt werden kann. Die vibrierende Trägeranordnung 18 kann dabei Gummielemente umfassen, die eine vibrierende des Förderelementes 12 relativ zu der ortsfesten Rahmenkonstruktion 17 ermöglichen. Vorteilhaft umfasst die Trägeranordnung 18 vier Gummielemente auf denen das Förderelement 12 auf der Rahmenkonstruktion 17 gelagert ist.

Der Vibrationsantrieb 16 kann dabei zumindest einen, vorzugsweise zwei Unwuchtmotoren 19 umfassen, wobei die Unwuchtmotoren 19 an vorzugsweise gegenüberliegenden Seiten des Förderelements 12 des Vibrationsförderers 10 angeordnet sind.

Die Erfindung wurde voranstehend an einem Ausführungsbeispiel beschrieben. Es versteht sich, dass zahlreiche Änderungen möglich sind, ohne dass dadurch der der Erfindung zugrundliegende Erfindungsgedanke verlassen wird.

### Bezugszeichenliste

- 1: System
- 2: Kippvorrichtung
- 4: Maschinengestell
- 4.1: Längsholme
- 4.2: Querträger
- 6: Schwenkkorb
- 6.1: Bodenplatte
- 6.2: Seitenwand
- 6.3: Öffnung
- 8: Stehlager

- 10: Vibrationsförderer
- 12: Förderelement
- 15: Abgabeabschnitt
- 15.1: Abwurfkante
- 16: Vibrationsantrieb
- 17: Rahmenkonstruktion
- 18: Trägeranordnung
- 19: Unwuchtmotor

- 22: Getriebeinrichtung

- 30: Fixiereinrichtung
- 31: Fixierbolzen
- 32: Fixierloch
- 33: Stellantrieb
- 34: Lagefixiereinrichtung
- 35: Anschlagseinrichtung
- 37: Führungsöffnung
- 36: Eingriffselement
- 38: Höhenverstelleinrichtung
- 39: Bügel
- 40: Rastleiste
- 41: Rastposition
- 50: Sensoreinrichtung
- 54: weitere Sensoreinrichtung
- 60: weitere Fördereinrichtung

- A: Auslauf
- AS: Achse
- BP: Beladeposition
- BE: Bodenebene
- E: Einlauf
- HE1: erste Höhenebene
- HE2: zweite Höhenebne
- HE3: dritte Höhenebene
- KP: Kippposition
- M: Antriebseinrichtung
- SE: Auswerte- und Steuereinrichtung

## Patentansprüche

1. System (1) zur Handhabung von Schüttgut oder dergleichen Elementen entlang einer Handhabungsstrecke,
wenigstens aufweisend eine Kippvorrichtung (2) und einen der Kippvorrichtung (2) entlang der Handhabungsstrecke nachgelagerten Vibrationsförderer (10), so dass das Schüttgut der Handhabungsstrecke an einem Einlauf (E) des Systems (1) schüttgutförmig zuführbar und an einem Auslauf (A) des Systems (1) vereinzelt oder im Wesentlichen vereinzelt abführbar ist,
wobei die Kippvorrichtung (2) zumindest ein Maschinengestell (4) sowie einen an dem Maschinengestell (4) um eine horizontale Achse (AS) stufenlos motorisch antreibaren Schwenkkorb (6) zur Aufnahme des Schüttguts und/oder zumindest eines mit Schüttgut befüllten Behältnisses aufweist,
wobei das Schüttgut mittels der Kippvorrichtung (2) dem Vibrationsförderer (10) dosiert zuführbar ist,
und wobei der Vibrationsförderer (10) zumindest eine die Handhabungsstrecke bildendes Förderelement (12) für das Schüttgut sowie wenigstens einen regel- und/oder steuerbaren Vibrationsantrieb (16) aufweist, mittels dem eine derart vibrierende Bewegung des Förderelements (12) erzeugbar ist, dass das dem Förderelement (12) dosiert zugeführte Schüttgut entlang des Förderelements (12) vereinzelt oder im Wesentlichen vereinzelt wird und an den Auslauf (A) des Systems (1) förderbar ist.

2. System (1) nach Anspruch 1, **dadurch gekennzeichnet, dass** das Maschinengestell (4) mehrere Längsholme (4.1) aufweist, die über zumindest einen, vorzugsweise mehrere Querträger (4.2) verbunden sind und wobei die Längsholme (4.1) höhenverstellbar ausgebildet sind, so dass sich über eine Höhenverstellung der Längsholme (4.1) die relative Höhenlage des an dem Maschinegestell (4) aufgenommen Schwenkkorbes (6) zu einer Bodenebene (BE) einstellen lässt.

3. System (1) nach Anspruch 1 oder 2, **dadurch gekennzeichnet, dass** der Schwenkkorb (6) an den Querträgern (4.2) des Maschinengestells (4) um die horizontale Achse AS stufenlos motorisch angetrieben kippbar angeordnet ist, wobei an vorzugsweise gegenüberliegenden Seiten der horizontalen Achse (AS) beidseitig jeweils ein Stehlager (8) vorgesehen ist, mittels denen der Schwenkkorb (6) drehbar gelagert aufgenommen ist.

4. System (1) nach einem der vorangehenden Ansprüche, **dadurch gekennzeichnet, dass** der Schwenkkorb (6) in einer ersten Höhenebene (HE1) höher liegt als der in einer zweiten Höhenebene (HE2) angeordnete Vibrationsförderer (10), so dass das Schüttgut von der Kippvorrichtung (2) auf den Vibrationsförderer (10) gekippbar ist.

5. System (1) nach einem der vorangehenden Ansprüche, **dadurch gekennzeichnet, dass** die horizontale Schwenkachse (AS) in ihrer Längserstreckung parallel oder im Wesentlichen parallel oberhalb des Vibrationsförderers (10), insbesondere parallel oberhalb des Förderelements (12) des Vibrationsförderers (10), vorgesehen ist und zwar vorzugsweise derart, dass mittels des Schwenkkorbes (6) der Kippvorrichtung (2) Schüttgut von der ersten Höhenebene (HE1) in den Vibrationsförderer (10) auf eine zweite Höhenebene (HE2) abgekippt werden kann.

6. System (1) nach einem der vorangehenden Ansprüche, **dadurch gekennzeichnet, dass** der Schwenkkorb (6) aus einer Beladeposition (BP) stufenlos um bis zu 135° motorisch gesteuert - und/oder geregelt in zumindest eine Kippposition (KP) verschwenkbar ausgebildet ist.

7. System (1) nach einem der vorangehenden Ansprüche, **dadurch gekennzeichnet, dass** die Kippvorrichtung (2) zur mechanischen Begrenzung des Schwenkbereiches des Schwenkkorbs (6) zumindest ein Anschlagselement aufweist, das vorzugsweise als hydraulische Stoßdämpfer ausgebildet ist.

8. System (1) nach einem der vorangehenden Ansprüche, **dadurch gekennzeichnet, dass** zur Einleitung der Schwenkbewegung auf den Schwenkkorb (6) eine elektrische Antriebseinrichtung (M) vorgesehen ist, die vorzugsweise eine Getriebeeinrichtung (22) aufweist, mittels der die Antriebseinrichtung (M) mechanisch mit dem Schwenkkorb (6) gekoppelt ist und/oder dass die Antriebseinrichtung (M) als frequenzgeregelter Motor oder Servomotor ausgebildet ist, der über eine als Winkelgetriebe ausgebildete Getriebeeinrichtung (22) mit dem Schwenkkorb (6) derart verbunden ist, dass der Schwenkkorb (6) stufenlos zwischen 0° und 135° relativ zum Förderelement (12) des Vibrationsförderers (10) schenkbar ist.

9. System (1) nach einem der vorangehenden Ansprüche, **dadurch gekennzeichnet, dass** die Kippvorrichtung (2) eine über eine Steuer- und Auswerteeinrichtung (SE) ansteuerbare und/oder händisch bewegbare Fixiereinrichtung (30) zur mechanischen Fixierung des Schwenkkorbes (6) in der jeweiligen Kippposition (KP) und/oder der jeweiligen Beladeposition (BP) aufweist.

10. System (1) nach einem der vorangehenden Ansprüche, **dadurch gekennzeichnet, dass** die Fixiereinrichtung (30) zumindest einen Fixierbolzen (31) aufweist, der in ein von mehreren vorgesehenen Fixierlöchern (32) des Schwenkkorbes (6) mechanisch einfahrbar ausgebildet ist, indem der Fixierbolzen (31) mittels eines Stellantriebs (33) zwischen einer in ein Fixierloch (32) eingreifenden Fixierposition und einer das entsprechende Fixierloch (32) freigebenden Freigabeposition gesteuert und/oder geregelt verstellbar ist und/oder
dass die Fixiereinrichtung (30) in Abhängigkeit zumindest eines Signals wenigstens einer Sensoreinrichtung (50), insbesondere einer optischen Sensoreinrichtung, wie einer Lichtschranke oder einer Kamera, betreibbar ist und/oder
dass der Stellantrieb (33) den Fixierbolzen (31) der Fixiereinrichtung (30) in Abhängigkeit eines Signals der Sensoreinrichtung (50) zwischen einer in ein Fixierloch (32) eingreifenden Fixierposition und einer das entsprechende Fixierloch (32) freigebenden Freigabeposition gesteuert und/oder geregelt verstellt.

11. System (1) nach einem der vorangehenden Ansprüche, **dadurch gekennzeichnet, dass** der Schwenkkorb (6) mehrere, in gleichen oder näherungsweise gleichen Winkelabständen um die horizontale Achse (AS) verteilt angeordnete Fixierlöcher (31) aufweist, die jeweils nierenförmig ausgebildet sind und/oder dass das System (1) eine an dem Schwenkkorb (6) angeordnete und an unterschiedliche Behältergrößen und/oder Behälterformen anpassbare Lagefixiereinrichtung (34) zur lagestabilen Fixierung eines entsprechenden Behältnisses in dem Schwenkkorb (6) aufweist.

12. System (1) nach einem der vorangehenden Ansprüche, **dadurch gekennzeichnet, dass** die Lagefixiereinrichtung (34) zur lagestabilen Fixierung eines entsprechenden Behältnisses in dem Schwenkkorb (6) eine Anschlagseinrichtung (35) und eine Höhenverstelleinrichtung (38) aufweist, wobei sowohl die Anschlagseinrichtung (35) als auch die Höhenverstelleinrichtung (38) an unterschiedliche Behältergrößen und/oder Behälterformen anpassbare sind und/oder dass die Anschlagseinrichtung (35) an einer, einer Öffnung (6.3) gegenüberliegenden Seitenwand (6.2) des Schwenkkorbes (6) ausgebildet ist und an unterschiedliche Höhen von Behältnissen anpassbar ist, indem die Anschlagseinrichtung (35) zumindest ein entlang einer schienenförmigen Führungsöffnung (37) verschiebbares hakenförmiges Eingriffselement (36) aufweist, das mit dem freien Randbereich der Oberkante des Behältnisses in Eingriff bringbar ist.

13. System (1) nach einem der vorangehenden Ansprüche, **dadurch gekennzeichnet, dass** die mechanisch verstellbare Höhenverstelleinrichtung (38) an der Öffnung (6.3) des Schwenkkorbes (6) ausgebildet ist und einen Bügel (39) aufweist, der mit seinen freien Enden jeweils in einer schienenförmigen Rastleiste (40) mit mehreren haken- oder nasenförmigen Rastpositionen (41) für den Bügel (39) eingreift, wobei die Lagefixiereinrichtung (34) dazu ausgebildet, den Bügel (39) in der jeweiligen haken- oder nasenförmigen Rastposition (41) fest, jedoch lösbar, in der entsprechenden Rastleiste (40) zu halten.

14. System (1) nach einem der vorangehenden Ansprüche, **dadurch gekennzeichnet, dass** das Schüttgut mittels der Kippvorrichtung (2) dem Vibrationsförderer (10) dosiert zuführbar ist, indem die Antriebseinrichtung (M) zum Kippen des Schwenkkorbes (6) von der Steuer- und Auswerteeinrichtung (SE) in Abhängigkeit eines von einer weiteren Sensoreinrichtung (54) erfassten Signals ansteuerbar ist, wobei die weitere Sensoreinrichtung (54) als optische Sensoreinrichtung, insbesondere als Kamera, ausgebildet ist, die dazu vorgesehen ist, das von der Kippvorrichtung (2) auf die Vibrationsfördereinrichtung (10) abgekippte Schüttgut zu erfassen und/oder dass eine als Füllstandsensor ausgebildete weitere optische Sensoreinrichtung (54), beispielsweise eine Lichtschranke, vorgesehen ist, die den Füllstand des Schüttgutes in dem Vibrationsförderer (10) erfasst und die Antriebseinrichtung (M) zum Kippen des Schwenkkorbes (6) von der Steuer- und Auswerteeinrichtung (SE) in Abhängigkeit in Abhängigkeit des erfassten Füllstands des Vibrationsförderers (10) abgekippt wird

15. System (1) nach einem der vorangehenden Ansprüche, **dadurch gekennzeichnet, dass** das Förderelement (12) einen Abgabeabschnitt (15) für das Schüttgut aufweist, über den das Schüttgut aus dem Vibrationsförderer (10) abgebbar ist, wobei der Abgabeabschnitt (15) als Rutschblech mit einer Abwurfkante (15.1) für das Schüttgut ausgebildet ist und/oder dass zwischen dem Vibrationsförderer (10) und dem Auslauf (A) eine weitere Fördereinrichtung (60) vorgesehen ist, die das Schüttgut von dem Vibrationsförderer (10) übernimmt und an den Auslauf (A) fördert.
